# EUROPEAN PATENT SPECIFICATION

(11) **EP 3 193 060 B1**
(45) Date of publication and mention of the grant of the patent: **03.04.2019**
(21) Application number: 16151405.4
(22) Date of filing: 15.01.2016
(51) Int. Cl.: F16K 41/04, F16K 43/00, F16K 1/52, F24D 19/10, G05D 23/02

(54) **VALVE, IN PARTICULAR HEAT EXCHANGER VALVE**
VENTIL, INSBESONDERE WÄRMETAUSCHERVENTIL
SOUPAPE, NOTAMMENT SOUPAPE D'ÉCHANGEUR DE CHALEUR

(43) Date of publication of application: 19.07.2017
(73) Proprietor: Danfoss A/S, 6430 Nordborg (DK)
(72) Inventor: Clausen, Anders Østergaard, 8680 Ry (DK)
(74) Representative: Keil & Schaafhausen Patent- und Rechtsanwälte PartGmbB

(56) References cited:
- WO-A1-2006/080036
- DE-A1- 4 407 373
- DE-A1-102010 032 011

## Description

The present invention relates to a valve, in particular a heat exchanger valve, comprising a housing arrangement, a valve element within said housing arrangement, stuffing box means comprising a removable stuffing box housing and being connected to said housing arrangement, and a pin slidingly accommodated within said stuffing box means.

Such a valve is known, for example, from DE 44 07 373 A1. The stuffing box means comprises a stuffing box screw which is screwed into an insert in a housing.

Such a valve is used, for example, to control the flow of a heating fluid, for example hot water, through a heat exchanger, for example a radiator or a floor heating piping. The flow is controlled with help of the valve element, which can, for example, cooperate with a valve seat. The position of the valve element is controlled from the outside via the pin. The pin is guided through the stuffing box means and sealed therein to prevent heating fluid to escape to the outside.

DE 10 2010 032 011 A1 describes a thermostatic valve having a housing and presetting means. The presetting means are made of a plastic material and accommodate an O-ring for sealing against a pin.

WO 2006/080036 A1 shows a further valve having a main body and a secondary body mounted rotatingly onto the main body, wherein the secondary body is made of a plastic material and accommodates sealing rings on the side facing a valve element.

The object underlying the present invention is to show a valve which can be produced with low costs.

This object is solved with a valve as described at the outset in that said stuffing box housing is made of a plastic material. The stuffing box means are connected to said housing arrangement by means of a thread-free connection.

A stuffing box housing which is made of a plastic material can be produced with low costs. In most cases a plastic material is cheaper than a metallic material, for example brass. Furthermore, a stuffing box housing which can be moulded in plastic is easier because it does not need any machining after moulding.

A stuffing box made of a plastic material tends to flow under changing heat conditions and elevated temperatures so that a thread connection would become loose. Therefore, other kinds of connections can be used to fix the stuffing box means in the housing arrangement. The housing arrangement comprises a valve housing and can comprise other parts like a valve top.

Preferably said connection comprises at least a protrusion at one part of the parts stuffing box means and housing arrangement and at least a corresponding recess at the other one of said parts stuffing box means and housing arrangement, wherein said protrusion is moveable into engagement with said recess. The stuffing box means can be fixed to said housing arrangement simply by moving the protrusion into engagement with the recess.

In a preferred embodiment said stuffing box means are rotatable with respect to said housing arrangement. By such a rotation the protrusion can be moved into engagement with the recess.

In a particularly preferred embodiment said connection is in form of a bajonett-connection. A bajonett-connection is established by inserting the stuffing box means axially, i. e. in a direction parallel to the axis of the pin into the housing arrangement until a predetermined position is reached. This position can for example be defined by a stop. Thereafter the stuffing box means are rotated relatively to the housing arrangement so that the protrusion, for example at the stuffing box means, comes into engagement with a recess which is e. g. formed behind another protrusion protruding radially inwardly into the housing means.

In another preferred embodiment said protrusion is moveable radially. When said protrusion is radially moveable, the stuffing box means can be inserted into the housing arrangement and thereafter the protrusion is moved radially inwardly so that a movement of the stuffing box means out of the housing arrangement is prevented.

In a preferred embodiment said protrusion is actuatable by means of an actuator moveable with respect to said housing arrangement. When the actuator is moved, said protrusion is pressed radially inwardly. The protrusion can, for example, be formed by a ball.

Preferably, said actuator is in form of a ring. That ring can be moved axially and has a decreasing inner diameter. When the decreasing diameter comes into contact with an element forming the protrusion this element is moved radially inwardly. Another possibility would be to turn such a ring provided that the ring has a form pressing the element radially inwardly upon rotation of the ring.

In another preferred embodiment said connection comprises a spring ring. The spring ring is compressed when the stuffing box means are inserted into the housing arrangement. When a groove in the stuffing box means and a corresponding groove in the housing arrangement come in overlapping relation the spring ring expands and fills partly the groove in the housing arrangement and partly the groove in the stuffing box means.

All the possibilities described above allow mounting of the stuffing box means in the housing arrangement without any tool.

In a preferred embodiment said stuffing box housing is fixed to a stuffing box holder which is connected to said housing arrangement, wherein said stuffing box holder preferably is of plastic material. The stuffing box housing can for example be connected to the stuffing box holder by means of a snap connection which can easily be established. The combination of stuffing box housing and stuffing box holder is then connected to the housing arrangement.

In another embodiment said stuffing box housing is directly connected to said housing arrangement. In this case, a stuffing box holder can be omitted.

In a preferred embodiment said housing arrangement comprises an insert, said valve element being loaded by a spring in a direction towards said inset, wherein said spring has a maximum extension larger than a maximum distance between said valve element and said insert. The stuffing box is located at an outside area of the valve top and the valve element is located at an inner side of the valve top. When the stuffing box is removed, the valve element is forced by the force of the spring against the valve top thereby sealing the valve to the outside so that during replacement of the stuffing box no heating fluid can escape to the outside.

Preferably a sealing element is located between said valve element and said valve top. This sealing element can, for example, be fixed to the valve element. A sealing element is a simple way to achieve a sufficient sealing. Preferably said valve top is made of a plastic material at least in a region to which said stuffing box is connected. Preferably said valve top is in total made of a plastic material. This allows for low production costs as well.

Preferably a sealing ring is positioned between said stuffing box housing and said housing arrangement. This sealing ring prevents escape of heating fluid to the outside.

Preferred examples of the invention will now be described in more detail with reference to the drawing, wherein:
- Fig. 1: shows a sectional view of a heat exchanger valve,
- Fig. 2: shows an enlarged view of stuffing box means according to Fig. 1,
- Fig. 3: shows an enlarged view of stuffing box means of another embodiment, and
- Fig. 4: shows another embodiment of a pin and a stuffing box means.

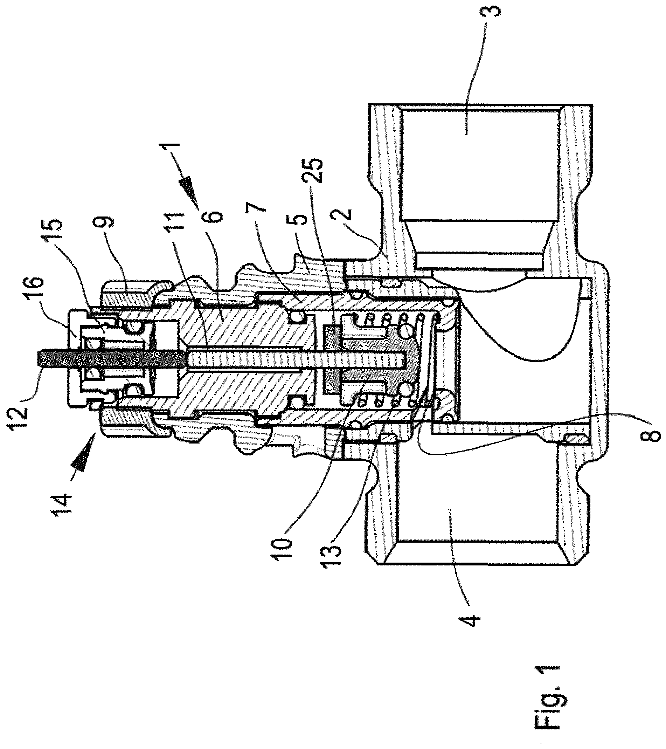

Fig. 1 shows a sectional view of a heat exchanger valve 1 comprising a valve housing 2. The valve housing comprises an inlet 3 and an outlet 4.

A valve top 5 is connected to the valve housing 2. An insert 6 is located within valve top 5. Insert 6 is rotatably fixed to a presetting element 7 defining a valve seat 8. Insert 6 can be rotated within valve top 5 by means of a handle 9. In order to simplify the description, the valve housing 2, valve top 5, insert 6 and presetting element 7 are together named "housing arrangement". The housing arrangement can include more or less than the named parts.

A valve element 10 is located within said housing arrangement, more precisely within the presetting element 7. The valve element 10 is connected to a valve stem 11 which in turn cooperates with a pin 12. The pin 12 can be made of plastic material as well as it can be made of ceramic.

The valve element 10 is loaded by a spring 13 in a direction away from the valve seat 8 and towards pin 12.

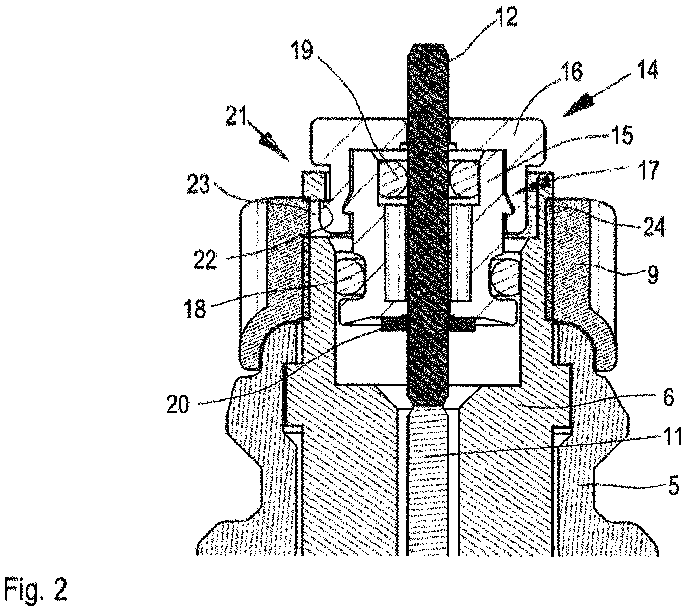

The pin 12 is slidingly accommodated in stuffing box means 14. In the embodiment shown in Fig. 1 stuffing box means 14 comprise a stuffing box housing 15 and a stuffing box holder 16. As can be seen in Fig. 2, the stuffing box housing 15 and the stuffing box holder 16 are connected to each other by means of a snap connection 17.

The stuffing box housing 15 is made of a plastic material. The stuffing box holder 16 can be made of a plastic material as well. The pin 12 can be made of a metal.

An outer sealing ring 18 is positioned between said stuffing box housing 15 and the insert 6 forming part of the housing arrangement. An inner sealing ring 19 is located between the stuffing box housing 15 and the pin 12.

The pin 12 comprises a stop 20 in form of a disc clipsed on pin 12 preventing a movement of pin 12 out of the stuffing box means 14 in a direction away from the valve seat 8.

In the embodiment shown in Fig. 1 and 2 the stuffing box means 14 are connected to insert 6 by means of a bajonett-connection 21. In the present form this bajonett-connection 21 comprises a protrusion 22 at the stuffing box means 14 and a recess 23 at the insert 6. Of course, a number of protrusions 23 are provided in circumferential direction of the stuffing box means 14. The protrusion 22 can be moved into the position shown via an axial slot 24 (shown for another protrusion). Thereafter the stuffing box means 14 are rotated relative to the insert 6 to bring the protrusion 22 into engagement with the recess 23. In this way a connection between the stuffing box means 14 and the insert 6 can be established without using a thread.

Other thread-free connections are possible. It is, for example, possible, to arrange the protrusions 22 at a radial inside of the insert 6 and the recess 23 at a radial outside of the stuffing box means.

Furthermore, it is possible to use a spring ring (not shown) and two matching grooves, namely one groove in the insert 6 and one groove in the stuffing box means 14. A spring ring can, for example, be arranged in the ring groove of the stuffing box means 14 and be compressed. In the compressed state of the spring ring it is possible to insert the stuffing box means into the insert 6. The spring ring expands when the two grooves are in overlapping relation to each other.

Furthermore, it is possible to use a number of balls distributed in circumferential direction of the insert 6 provided that the stuffing box means 14 have corresponding recesses or a circumferentially running groove. When the stuffing box means 14 are inserted into the insert 6, the balls can be pressed radially inwardly to establish a connection between the stuffing box means 14 and the insert 6. The balls can be moved, for example, by means of a ring like the handle 9, for example by turning such a ring or by moving such a ring axially.

As can be seen in Fig. 1 a sealing element 25 is located between the valve element 10 and insert 6. When the stuffing box means 14 are removed out of insert 6, for example for replacing the stuffing box means 14, the spring 13 presses the sealing means 25 against insert 6 to establish a tight sealing and to prevent an escape of heating fluid to the outside.

In the embodiment shown in Fig. 1 and 2 the stuffing box means 14 comprise a stuffing box holder 16 which is used to establish the connection between the stuffing box means 14 and the insert 6.

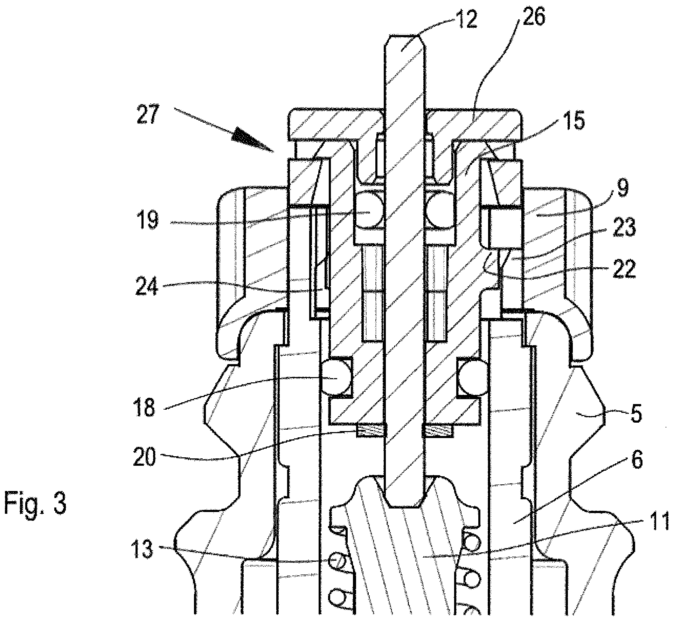

Fig. 3 shows another embodiment in which the same elements as shown in Fig. 1 and 2 are designated with the same numerals.

In this embodiment the stuffing box housing 15 forms directly the bajonett-connection with the insert 6, i. e. the protrusion 22 is part of the stuffing box housing 15. The stuffing box housing 15 is closed with a lid 26, said lid being connected to the stuffing box housing by means of a snap connection 27.

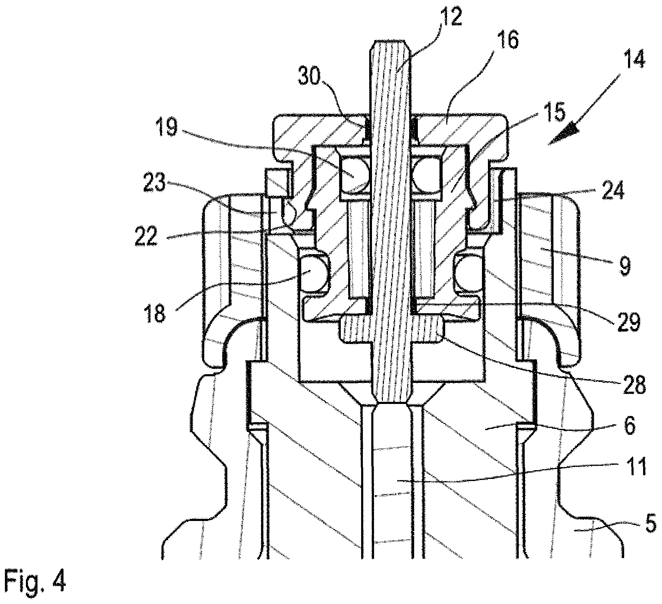

Fig. 4 shows a further embodiment of stuffing box means 14 with a slightly modified pin 12.

Pin 12 comprises a section 28 having an enlarged outer diameter. This section is shown in form of a disk. However, it is possible to use a section with a larger diameter with a greater length. It is possible to extend the section down to the valve stem 11.

Furthermore, the stuffing box holder 16 is provided with a friction reducing material 30, for example polytetrafluoethylene, in a region in which the pin 12 contacts the stuffing box holder 16. A similar friction reducing plastic material 29 can be used in a region between the pin 12 and the stuffing box housing 15.

## Claims

1. Valve, in particular heat exchanger valve (1) comprising a housing arrangement (2, 5, 6, 7), a valve element (10) within said housing arrangement (2, 5, 6, 7), stuffing box means (14) comprising a removable stuffing box housing (15) and a stuffing box holder (16) and being connected to said housing arrangement (2, 5, 6, 7), and a pin (12) slidingly accommodated within said stuffing box means (14), wherein said stuffing box housing (15) is made of a plastic material,
**characterized in that** said stuffing box means (14) are connected to said housing arrangement (2, 5, 6, 7) by means of a thread-free connection allowing mounting of the stuffing box means (14) without any tool.

2. Valve according to claim 1, **characterized in that** said connection comprises at least a protrusion (22) at one part of the parts stuffing box means (14) and housing arrangement (2, 5, 6, 7) and at least a corresponding recess (23) at the other one of said parts stuffing box means (14) and housing arrangement (2, 5, 6, 7), wherein said protrusion (22) is movable into engagement with said recess (23).

3. Valve according to claim 2, **characterized in that** said stuffing box means (14) are rotatable with respect to said housing arrangement (2, 5,6, 7).

4. Valve according to claim 3, **characterized in that** said connection is in form of a bajonett-connection (21).

5. Valve according to claim 2, **characterized in that** said protrusion is movable radially.

6. Valve according to claim 5, **characterized in that** said protrusion (22) is actuatable by means of an actuator movable with respect to said housing arrangement.

7. Valve according to claim 6, **characterized in that** said actuator is in form of a ring.

8. Valve according to any of claims 1 to 7, **characterized in that** said connection comprises a spring ring.

9. Valve according to any of claims 1 to 8, **characterized in that** said stuffing box housing (15) is fixed to a stuffing box holder (16) which is connected to said housing arrangement (2, 5, 6, 7), wherein said stuffing box holder (16) preferably is of plastic material.

10. Valve according to any of claims 1 to 8, **characterized in that** said stuffing box housing (15) is directly connected to said housing arrangement (2, 5, 6, 7).

11. Valve according to any of claims 1 to 10, **characterized in that** said housing arrangement (2, 5, 6, 7) comprises an insert (6) and a valve top (5), said valve element (10) being loaded by a spring (13) in a direction towards said insert (6), wherein said spring has a maximum extension larger than a maximum distance between said valve element (10) and said insert (6).

12. Valve according to claim 11, **characterized in that** a sealing element (25) is located between said valve element (10) and said insert (6).

13. Valve according to claim 11 or 12, **characterized in that** said valve top (5) is made of a plastic material at least in a region to which said stuffing box means (14) are connected.

14. Valve according to any of claims 1 to 13, **characterized in that** a sealing ring (18) is positioned between said stuffing box housing (15) and said housing arrangement (2, 5, 6, 7).

## Patentansprüche

1. Ventil, insbesondere Wärmetauscherventil (1), das eine Gehäuseanordnung (2, 5, 6, 7), ein Ventilelement (10) in der Gehäuseanordnung (2, 5, 6, 7), Stopfbuchseneinrichtungen (14), die ein lösbares Stopfbuchsengehäuse (15) und eine Stopfbuchsenhalterung (16) umfassen und mit der Gehäuseanordnung (2, 5, 6, 7) verbunden sind, und einen Stift (12) umfasst, der verschiebbar in den Stopfbuchseneinrichtungen (14) untergebracht ist, wobei das Stopfbuchsengehäuse (15) aus einem Kunststoffmaterial gefertigt ist,
**dadurch gekennzeichnet, dass**
die Stopfbuchseneinrichtungen (14) über eine gewindelose Verbindung mit der Gehäuseanordnung (2, 5, 6, 7) verbunden sind, wodurch die Stopfbuchseneinrichtungen (14) ohne Werkzeug montiert werden können.

2. Ventil nach Anspruch 1, **dadurch gekennzeichnet, dass** die Verbindung mindestens einen Vorsprung (22) an einem Teil der Stopfbuchseneinrichtungen (14) oder der Gehäuseanordnung (2, 5, 6, 7) und mindestens eine zugehörige Aussparung (23) an dem anderen des Teils der Stopfbuchseneinrichtungen (14) bzw. der Gehäuseanordnung (2, 5, 6, 7) umfasst, wobei der Vorsprung (22) in die Aussparung (23) eingreifen kann.

3. Ventil nach Anspruch 2, **dadurch gekennzeichnet, dass** die Stopfbuchseneinrichtungen (14) in Bezug zu der Gehäuseanordnung (2, 5, 6, 7) drehbar sind.

4. Ventil nach Anspruch 3, **dadurch gekennzeichnet, dass** die Verbindung eine Bajonettverbindung (21) ist.

5. Ventil nach Anspruch 2, **dadurch gekennzeichnet, dass** der Vorsprung radial beweglich ist.

6. Ventil nach Anspruch 5, **dadurch gekennzeichnet, dass** der Vorsprung (22) über einen Aktor, der in Bezug zu der Gehäuseanordnung beweglich ist, betätigt werden kann.

7. Ventil nach Anspruch 6, **dadurch gekennzeichnet, dass** der Aktor ringförmig ist.

8. Ventil nach einem der Ansprüche 1-7, **dadurch gekennzeichnet, dass** die Verbindung einen Federring umfasst.

9. Ventil nach einem der Ansprüche 1-8, **dadurch gekennzeichnet, dass** das Stopfbuchsengehäuse (15) an einer Stopfbuchsenhalterung (16), die mit der Gehäuseanordnung (2, 5, 6, 7) verbunden ist, befestigt ist, wobei die Stopfbuchsenhalterung (16) bevorzugt aus einem Kunststoffmaterial besteht.

10. Ventil nach einem der Ansprüche 1-8, **dadurch gekennzeichnet, dass** das Stopfbuchsengehäuse (15) direkt mit der Gehäuseanordnung (2, 5, 6, 7) verbunden ist.

11. Ventil nach einem der Ansprüche 1-10, **dadurch gekennzeichnet, dass** die Gehäuseanordnung (2, 5, 6, 7) einen Einsatz (6) und ein Ventiloberteil (5) umfasst, wobei das Ventilelement (10) von einer Feder (13) in Richtung des Einsatzes (6) vorgespannt wird, wobei die Maximalausdehnung der Feder größer als der Maximalabstand zwischen dem Ventilelement (10) und dem Einsatz (6) ist.

12. Ventil nach Anspruch 11, **dadurch gekennzeichnet, dass** sich ein Dichtungselement (25) zwischen dem Ventilelement (10) und dem Einsatz (6) befindet.

13. Ventil nach Anspruch 11 oder 12, **dadurch gekennzeichnet, dass** das Ventiloberteil (5) zumindest in einem Bereich, mit dem die Stopfbuchseneinrichtungen (14) verbunden sind, aus einem Kunststoffmaterial gefertigt ist.

14. Ventil nach einem der Ansprüche 1 bis 13, **dadurch gekennzeichnet, dass** ein Dichtungsring (18) zwischen dem Stopfbuchsengehäuse (15) und der Gehäuseanordnung (2, 5, 6, 7) positioniert ist.

## Revendications

1. Soupape, en particulier soupape d'échangeur de chaleur (1) comprenant un agencement de boîtier (2, 5, 6, 7), un élément de soupape (10) dans ledit agencement de boîtier (2, 5, 6, 7), un moyen presse-étoupe (14) comprenant un boîtier de presse-étoupe (15) amovible et un support de presse-étoupe (16) et étant connecté audit agencement de boîtier (2, 5, 6, 7), et une broche (12) logée de manière coulissante dans ledit moyen presse-étoupe (14),
ledit boîtier de presse-étoupe (15) étant en matière plastique,
**caractérisée en ce que** ledit moyen presse-étoupe (14) est relié audit agencement de boîtier (2, 5, 6, 7) au moyen d'un raccordement sans filetage permettant le montage du moyen presse-étoupe (14) sans aucun outil.

2. Soupape selon la revendication 1, **caractérisée en ce que** ledit raccordement comprend au moins une saillie (22) au niveau d'une pièce parmi les pièces moyen presse-étoupe (14) et agencement de boîtier (2, 5, 6, 7) et au moins un évidement (23) correspondant au niveau de l'autre pièce parmi les pièces moyen presse-étoupe (14) et agencement de boîtier (2, 5, 6, 7), ladite saillie (22) étant mobile en prise avec ledit évidement (23).

3. Soupape selon la revendication 2, **caractérisée en ce que** ledit moyen presse-étoupe (14) est rotatif par rapport audit agencement de boîtier (2, 5, 6, 7).

4. Soupape selon la revendication 3, **caractérisée en ce que** le raccordement est réalisé sous la forme d'un raccordement à baïonnette (21).

5. Soupape selon la revendication 2, **caractérisée en ce que** ladite saillie est radialement mobile.

6. Soupape selon la revendication 5, **caractérisée en ce que** ladite saillie (22) peut être actionnée au moyen d'un actionneur mobile par rapport audit agencement de boîtier.

7. Soupape selon la revendication 6, **caractérisée en ce que** ledit actionneur est en forme de bague.

8. Soupape selon l'une quelconque des revendications 1 à 7, **caractérisée en ce que** ledit raccordement comprend une bague élastique.

9. Soupape selon l'une quelconque des revendications 1 à 8, **caractérisée en ce que** ledit boîtier de presse-étoupe (15) est fixé à un support de presse-étoupe (16) qui est relié audit agencement de boîtier (2, 5, 6, 7), ledit support de presse-étoupe (16) étant de préférence en matière plastique.

10. Soupape selon l'une quelconque des revendications 1 à 8, **caractérisée en ce que** ledit boîtier de presse-étoupe (15) est directement relié audit agencement de boîtier (2, 5, 6, 7) .

11. Soupape selon l'une quelconque des revendications 1 à 10, **caractérisée en ce que** ledit agencement de boîtier (2, 5, 6, 7) comprend un insert (6) et une partie supérieure de soupape (5), ledit élément de soupape (10) étant chargé par un ressort (13) dans une direction vers ledit insert (6), ledit ressort ayant une extension maximale supérieure à une distance maximale entre ledit élément de soupape (10) et ledit insert (6).

12. Soupape selon la revendication 11, **caractérisée en ce qu'**un élément d'étanchéité (25) est situé entre ledit élément de soupape (10) et ledit insert (6).

13. Soupape selon la revendication 11 ou 12, **caractérisée en ce que** ladite partie supérieure de soupape (5) est en matière plastique au moins dans une zone à laquelle ledit moyen presse-étoupe (14) est relié.

14. Soupape selon l'une quelconque des revendications 1 à 13, **caractérisée en ce qu'**un anneau d'étanchéité (18) est positionné entre ledit boîtier de presse-étoupe (15) et ledit arrangement de boîtier (2, 5, 6, 7).
